# EUROPEAN PATENT APPLICATION

(11) **EP 4 249 318 A1**
(43) Date of publication of application: **27.09.2023**
(21) Application number: 23156436.0
(22) Date of filing: 14.02.2023
(51) Int. Cl.: B60L 53/37, B60L 53/80

(54) **BATTERY SWAPPING MANAGEMENT SYSTEM AND METHOD FOR BATTERY SWAP STATION**

(30) Priority: 21.03.2022 CN 202210274252
(71) Applicant: Nio Technology (Anhui) Co., Ltd, Hefei City, Anhui 230601 (CN)
(72) Inventor: WANG, Yifei, Hefei City, Anhui, 230601 (CN); ZOU, Jiyong, Hefei City, Anhui, 230601 (CN)
(74) Representative: Vossius & Partner Patentanwälte Rechtsanwälte mbB

(57) **Abstract**

The disclosure relates to a battery swapping vehicle management system and method for a battery swap station. The battery swapping vehicle management system comprises a battery swap station self-checking unit, a parking assistance unit, a battery swap service unit, and a departure assistance unit. The battery swap station self-checking unit is configured to check and determine whether the battery swap station has a service capacity, and notify a vehicle with a battery to be swapped to be ready for battery swapping if the battery swap station has the service capacity. The parking assistance unit is configured to assist the vehicle with a battery to be swapped to enter a battery swap region in the battery swap station from a pre-parking region outside the battery swap station. The battery swap service unit is configured to perform a battery swapping action for the vehicle with a battery to be swapped that is in position in the battery swap region. The departure assistance unit is configured to be able to assist the battery swapping vehicle to exit the battery swap station. The battery swapping vehicle management system of the disclosure is applicable to fully self-service battery swap station scenarios, and effectively ensures the battery swap order and operating efficiency of the battery swap station.

## Description

### Technical Field

The disclosure relates to the field of vehicles, and in particular to a battery swapping vehicle management system and method for a battery swap station.

### Background Art

In recent years, with the reduction of oil resources and the serious pollution of the atmospheric environment, the development of electric vehicles has become an inevitable trend in the development of the automotive industry. The vigorous development of electric vehicles is an important choice to ensure the energy security in China and achieve sustainable development of the automotive industry.

At present, battery electric vehicles mainly have two energy replenishment modes, i.e., a vehicle charging mode and a battery replacement mode. For the vehicle charging for a battery electric vehicle, the alternating current trickle charge takes a long time and is limited by the parking space, and the direct current fast charge has high power and short charging time, but has a great impact on the grid and will also shorten service life of the battery. The battery swap mode can interact with the grid to achieve orderly charging to implement "peak shaving and energy storage" of the power load, which can improve the comprehensive utilization efficiency of power devices, and can quickly replenish energy to the electric vehicle to shorten the user's waiting time, and also not damage the battery life. Therefore, the battery swap mode has high promotion value and economic significance in the field of public transportation of first-tier cities in China.

With the increasing recognition of battery swap stations, more and more vehicle companies have joined the development process of battery swap stations. Moreover, the increase in the number of users has led to a gradual increase in the number of vehicles in service in battery swap stations per unit time. Some battery swap stations work at full capacity during the day, but still have queues of vehicles. In this case, in addition to continuously improving the mechanical efficiency during the battery swap, it is necessary to effectively manage the battery swapping vehicles, arrange the battery swap, and ensure the orderly and reliable operation of the battery swap stations.

### Summary of the Disclosure

The system and method battery swapping vehicle management according to the disclosure can be applied to scenarios of fully self-service battery swap station, effectively manage the battery swapping vehicle while protecting the safety of the battery swapping vehicle, drivers and passengers, allow the vehicle to achieve self-service entry, self-service battery swap and self-service off-station from the station after battery swap in the case of unattended operation in the station, so as to ensure the operating efficiency of the battery swap station and also reduce the operating cost of the battery swap station while ensuring the user experience.

A first aspect of the disclosure provides a battery swapping vehicle management system for a battery swap station, the battery swapping vehicle management system comprising a battery swap station self-checking unit, a parking assistance unit, and a battery swap service unit. The battery swap station self-checking unit is configured to check and determine whether the battery swap station has a service capacity, and notify a vehicle with a battery to be swapped to be ready for battery swapping if the battery swap station has the service capacity; the parking assistance unit is configured to assist the vehicle with a battery to be swapped to enter a battery swap region in the battery swap station from a pre-parking region outside the battery swap station; and the battery swap service unit is configured to perform a battery swapping action for the vehicle with a battery to be swapped that is in position in the battery swap region.

According to the battery swapping vehicle management system as described above, the battery swapping vehicle management system further comprises a departure assistance unit that is configured to be able to assist the battery swapping vehicle to exit the battery swap station.

According to the battery swapping vehicle management system as described above, the departure assistance unit further comprises a departure assistance interaction interface that is configured to be able to interact with a user to determine whether there is a need to assist the battery swapping vehicle to exit the battery swap station; if yes, the departure assistance unit performs an action of assisting the battery swapping vehicle to exit the battery swap station; and If not, the departure assistance unit does not perform the action of assisting the battery swapping vehicle to exit the battery swap station.

According to the battery swapping vehicle management system as described above, the battery swap station self-checking unit comprises a vehicle presence detection module that is configured to detect whether there is a vehicle in the battery swap station, and the battery swap station self-checking unit determines whether the battery swap station has a service capacity at least by determining whether there is a vehicle in the battery swap station.

In the battery swapping vehicle management system as described above, the parking assistance unit comprises a parking monitoring module and an in-station vehicle monitoring module. The parking monitoring module is configured to monitor a travel of the vehicle with a battery to be swapped from the pre-parking region to the battery swap region; and the in-station vehicle monitoring module is configured to monitor whether the vehicle with a battery to be swapped is in position in the battery swap region.

According to the battery swapping vehicle management system as described above, the parking assistance unit comprises a path planning module that is configured to be able to provide a traveling path planning for the vehicle with a battery to be swapped in the pre-parking region to travel from the pre-parking region to the battery swap region.

According to the battery swapping vehicle management system as described above, the parking assistance unit further comprises a planning interaction interface that is in communication connection with the path planning module and is configured to be able to interact with the user to determine whether there is a need to provide a traveling path planning for the vehicle with a battery to be swapped to travel from the pre-parking region to the battery swap region; if it is determined that there is a need, the path planning module performs an action of traveling path planning; and if it is determined that there is no need, the path planning module does not perform the action of traveling path planning.

According to the battery swapping vehicle management system as described above, the battery swap service unit further comprises a battery swapping condition detection module that is configured to detect whether the vehicle with a battery to be swapped satisfies a battery swapping condition before the battery swapping action is performed.

A second aspect of the disclosure provides a battery swapping vehicle management method for a battery swap station, the battery swapping vehicle management method comprising a battery swap station self-checking step, a parking assistance step, and a battery swap service step. The battery swap station self-checking step comprises: checking and determining whether the battery swap station has a service capacity, and notifying a vehicle with a battery to be swapped to be ready for battery swapping if the battery swap station has the service capacity; the parking assistance step comprises: assisting the vehicle with a battery to be swapped to enter a battery swap region in the battery swap station from a pre-parking region outside the battery swap station; and the battery swap service step comprises: performing a battery swapping action for the vehicle with a battery to be swapped that is in position in the battery swap region.

According to the battery swapping vehicle management method as described in the second aspect, the battery swapping vehicle management method further comprises a departure assistance step that comprises assisting the battery swapping vehicle to exit the battery swap station.

According to the battery swapping vehicle management method as described in the second aspect, the departure assistance step further comprises a departure assistance interaction step that comprises interacting with a user to determine whether there is a need to assist the battery swapping vehicle to exit the battery swap station, and if yes, assisting the battery swapping vehicle to exit the battery swap station.

According to the battery swapping vehicle management method as described in the second aspect, the battery swap station self-checking step comprises: detecting whether there is a vehicle in the battery swap station, and determining whether the battery swap station has a service capacity at least by determining whether there is a vehicle in the battery swap station.

According to the battery swapping vehicle management method as described in the second aspect, the parking assistance step comprises: monitoring a travel of the vehicle with a battery to be swapped from the pre-parking region to the battery swap region, and detecting whether the vehicle with a battery to be swapped is in position in the battery swap region.

According to the battery swapping vehicle management method as described in the second aspect, the parking assistance step comprises providing a traveling path planning for the vehicle with a battery to be swapped in the pre-parking region to travel from the pre-parking region to the battery swap region.

According to the battery swapping vehicle management method as described in the second aspect, the parking assistance step further comprises interacting with the user to determine whether there is a need to provide a traveling path planning for the vehicle with a battery to be swapped to travel from the pre-parking region to the battery swap region; and if it is determined that there is a need, the parking assistance step further comprises providing the traveling path planning for the vehicle with a battery to be swapped.

According to the battery swapping vehicle management method as described in the second aspect, the battery swap service step comprises detecting whether the vehicle with a battery to be swapped satisfies a battery swapping condition before the battery swapping action is performed.

A third aspect of the disclosure provides a battery swap station comprising a battery swapping vehicle management system according to the first aspect of the disclosure.

A fourth aspect of the disclosure provides a computer storage medium comprising instructions which, when executed, cause the battery swapping vehicle management method as described in the second aspect of the disclosure to be carried out.

According to the disclosure, the battery swapping vehicle management system and method can effectively manage the entry, battery swap and departure of the battery swapping vehicle, ensure the orderly and reliable operation of the battery swap station, and use intelligent means to effectively improve the service capacity of the battery swap station. In addition, the battery swapping vehicle management system and method according to the disclosure can satisfy different user habits and needs, reduce the overall waiting time of users, and allow the battery swap station to obtain the maximum throughput, so as to achieve the purpose of further improving the operating efficiency of the battery swap station and improving the user experience of the battery swap station.

### Brief Description of the Drawings

FIG. 1 is a schematic diagram of a battery swap station and the environment outside the station according to an embodiment of the disclosure;
FIG. 2 shows a schematic diagram of a battery swapping vehicle management system for the battery swap station shown in FIG. 1; and
FIG. 3 shows a schematic diagram of a battery swapping vehicle management method executed by the battery swapping vehicle management system shown in FIG. 2.

### Detailed Description of Embodiments

A battery swapping vehicle management system and method for a battery swap station involved in the disclosure will be described in further detail below with reference to the accompanying drawings. It should be noted that the following detailed description of embodiments is exemplary rather than limiting, and is intended to provide a basic understanding of the disclosure, and is not intended to confirm key or decisive elements of the disclosure or limit the scope of protection.

The disclosure is described below with reference to the block diagram descriptions, the block diagrams, and/or the flowcharts of the methods and apparatuses in the embodiments of the disclosure. It will be understood that each block of these flowchart descriptions and/or the block diagrams, and combinations of the flowchart descriptions and/or the block diagrams, can be implemented by computer program instructions. These computer program instructions may be provided for a processor of a general-purpose computer, a dedicated computer, or a further programmable data processing device to generate a machine, so that the instructions executed by the processor of the computer or the further programmable data processing device create components for implementing the functions/operations specified in these flowcharts and/or blocks and/or one or more flow block diagrams.

These computer program instructions may be stored in a computer-readable memory, and the instructions can instruct a computer or another programmable processor to implement the functions in a specific manner, so that the instructions stored in the computer-readable memory generate a manufactured product containing instruction components that implement the functions/operations specified in one or more blocks of the flowcharts and/or the block diagrams.

These computer program instructions may be loaded onto the computer or the further programmable data processor, so that a series of operations and steps are performed on the computer or the further programmable processor, to generate a computer-implemented process. As such, the instructions executed on the computer or the further programmable data processor provide steps for implementing the functions or operations specified in one or more blocks in the flowcharts and/or block diagrams. It should also be noted that in some alternative implementations, the functions/operations shown in the blocks may not occur in the order shown in the flowcharts. For example, two blocks shown in sequence may actually be executed substantially simultaneously or the blocks may sometimes be executed in a reverse order, depending on the functions/operations involved.

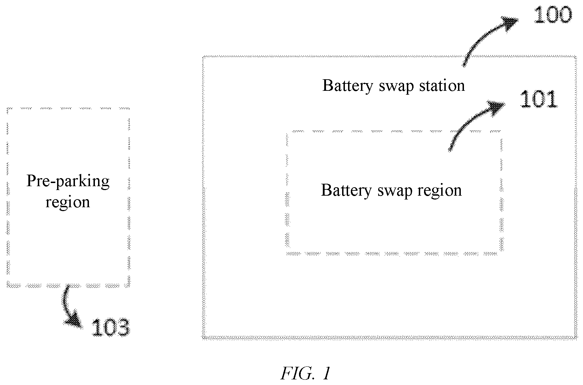

A battery swap station 100 and the environment outside the station according to an embodiment of the disclosure will be described below with reference to FIG. 1.

FIG. 1 is a schematic diagram of a battery swap station 100 and the environment outside the station according to an embodiment of the disclosure. As shown in FIG. 1, a battery swap region 101 is provided in the battery swap station 100. A pre-parking region 103 is located outside the battery swap station 100. In this embodiment, the entrance/exit of the battery swap station 100 is on the left side of the battery swap station 100, and the pre-parking region 103 is located not far from the left side of the battery swap station 100. When a vehicle needs battery swapping, first, the vehicle with a battery to be swapped needs to enter the pre-parking region 103 outside the station. Next, the vehicle with a battery to be swapped in the pre-parking region 103 then parks into a battery swap region 101 from the left side of the battery swap station 100. After the vehicle with a battery to be swapped is parked in position in the battery swap region 101, the battery swap station 100 can perform a battery swapping action for the battery swapping vehicle. After the battery swap of the vehicle, the battery swapping vehicle then exits the battery swap station 100 from the left side of the battery swap station 100 through the entrance/exit of the battery swap station.

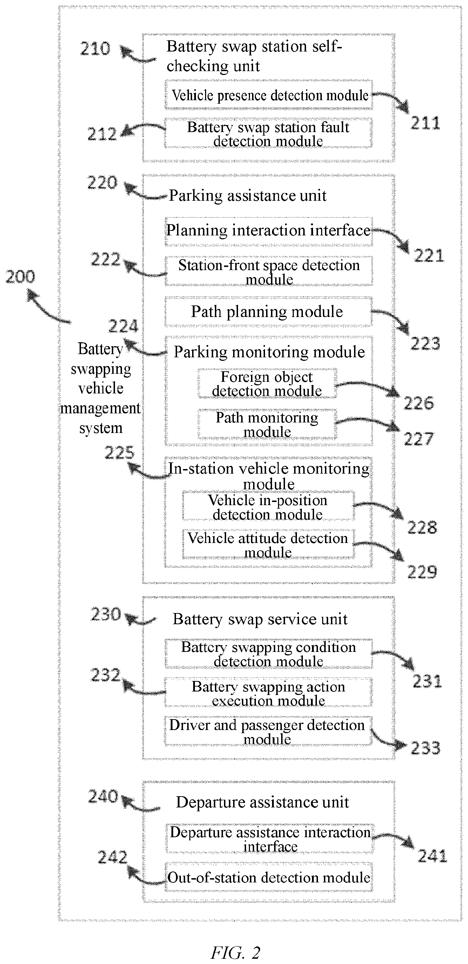

FIG. 2 shows a schematic diagram of a battery swapping vehicle management system 200 for a battery swap station 100 according to an embodiment of the disclosure. As shown in FIG. 2, the battery swapping vehicle management system 200 comprises a battery swap station self-checking unit 210, a parking assistance unit 220, a battery swap service unit 230, and a departure assistance unit 240. The battery swap station self-checking unit 210 is configured to check and determine whether the battery swap station 100 has a service capacity, and notify a vehicle with a battery to be swapped to be ready for battery swapping if the battery swap station 100 has the service capacity. In the embodiment, the battery swapping vehicle management system 200 allows vehicles with a battery to be swapped that send a battery swap request to the battery swap station 100 to be sorted in chronological order, and notifies the vehicle with a battery to be swapped with the highest priority to be ready for battery swapping. In other embodiments, the vehicles with a battery to be swapped that send a battery swap request may also be sorted by another priority. The parking assistance unit 220 is configured to assist the vehicle with a battery to be swapped to enter the battery swap region 101 in the battery swap station 100 from the pre-parking region 103 outside the battery swap station 100. The battery swap service unit 230 is configured to perform a battery swapping action for the vehicle with a battery to be swapped that is in position in the battery swap region 101. The departure assistance unit 240 is configured to be able to assist the battery swapping vehicle to exit the battery swap station 101.

The battery swapping vehicle management system 200 in this embodiment can manage a battery swapping vehicle to automatically enter the battery swap station 100 for battery swapping without intervention by a driver and automatically exit the battery swap station 100 after the battery swap, which effectively realizes the automation and intelligence in the vehicle battery swap scenario and greatly improves the intelligent service capacity of the battery swap station 100. In other embodiments, corresponding to the scenario of battery swap while the user is driving the vehicle, the battery swapping vehicle management system 200 may optionally not comprise any one or more of the battery swap station self-checking unit 210, the parking assistance unit 220, the battery swap service unit 230 and the departure assistance unit 240 as needed. However, as long as any of the above units is not included, the battery swapping vehicle management system 200 cannot implement a whole-process intelligent and automatic battery swap service for the battery swapping vehicle. For example, in this embodiment, the battery swapping vehicle management system 200 comprises the departure assistance unit 240 to guide the battery swapping vehicle to safely exit the battery swap station 100. In other embodiments, if the battery swapping vehicle management system 200 does not comprise the departure assistance unit 240, the vehicle after battery swap cannot obtain departure guidance, which will cause a great obstacle to the departure process of the vehicle.

As shown in FIG. 2, the battery swap station self-checking unit 210 comprises a vehicle presence detection module 211 and a battery swap station fault detection module 212. The vehicle presence detection module 211 is configured to detect whether there is a vehicle in the battery swap station 100. If there is a vehicle in the battery swap station 100, which means that the battery swap process of the previous battery swapping vehicle has not been completely finished, the battery swapping vehicle management system 200 cannot accept the battery swap request from the next battery swapping vehicle. The battery swap station fault detection module 212 is configured to detect whether the battery swap station 100 is faulty. If the battery swap station 100 is faulty, the battery swapping vehicle management system 200 cannot perform the battery swapping action. That is, when the vehicle presence detection module 211 detects that there is a vehicle in the battery swap station 100, or when the battery swap station fault detection module 212 detects that the battery swap station 100 is faulty, the battery swap station self-checking unit 210 determines that the battery swap station 100 does not have a service capacity as long as either of the conditions is satisfied. In other embodiments, the battery swap station self-checking unit 210 may also determine the service capacity of the battery swap station 100 according to other conditions. For example, in other embodiments, the battery swap station self-checking unit 210 only comprises the vehicle presence detection module 211 and determines whether the battery swap station 100 has service capacity only by means of detecting whether there is a vehicle in the battery swap station 100. In other embodiments, the battery swap station self-checking unit 210 comprises, in addition to the vehicle presence detection module 211 and the battery swap station fault detection module 212, a to-be-swapped battery detection module to detect whether there is a battery in the battery swap station 100 for the next battery swapping vehicle. If the batteries for battery swapping in the battery swap station 100 are all in the charging state and there is no suitable battery available for battery swapping, the battery swapping vehicle management system 200 cannot accept a battery swap request from the next battery swapping vehicle.

The parking assistance unit 220 comprises a planning interaction interface 221, a station-front space detection module 222, a path planning module 223, a parking monitoring module 224, and an in-station vehicle monitoring module 225.

The planning interaction interface 221 is configured to be able to interact with the user to determine whether there is a need to provide a traveling path planning for the vehicle with a battery to be swapped to travel from the pre-parking region 103 to the battery swap region 101. The station-front space detection module 222 is configured to detect a traveling space in front of the battery swap station 100 so as to provide a reference for the traveling path planning of the vehicle with a battery to be swapped from the pre-parking region 103 to the battery swap region 101. The traveling space in front of the battery swap station 100 is a space outside the station at the entrance/exit of the battery swap station 100. In this embodiment, the traveling space in front of the battery swap station 100 is a space outside the station on the left side of the battery swap station 100. The path planning module 223 is configured to be able to provide a traveling path planning for the vehicle with a battery to be swapped in the pre-parking region 103 to travel from the pre-parking region 103 to the battery swap region 101.

The planning interaction interface 221 is in communication connection with the station-front space detection module 222 and the path planning module 223. If the planning interaction interface 221 receives a message that there is a need to provide a traveling path planning, the station-front space detection module 222 and the path planning module 223 respectively perform an action of station-front space detection and an action of traveling path planning; and if the planning interaction interface 221 receives a message that there is no need to provide a traveling path planning, the station-front space detection module 222 and the path planning module 223 do not perform the action of station-front space detection and the action of traveling path planning. In this embodiment, the battery swapping vehicle management system 200 comprises the planning interaction interface 221, the station-front space detection module 222, and the path planning module 223. The three modules cooperate with each other for both the scenario of battery swap for a driverless vehicle and the scenario of battery swap while a user is driving the vehicle, so as to implement a traveling path planning available for the user to travel from the pre-parking region 103 to the battery swap region 101.

The station-front space detection module 222 and the path planning module 223 can automatically plan a traveling path for the battery swapping vehicle from the pre-parking region 103 to the battery swap region 101, which further realizes the automation and intelligence in the process of the battery swapping vehicle entering the battery swap region 101 of the battery swap station 100. That is, the station-front space detection module 222 and the path planning module 223 are provided to enable the battery swapping vehicle management system 200 to plan a traveling path for the battery swapping vehicle from the pre-parking region 103 to the battery swap region 101, so as to manage the battery swapping vehicle to automatically enter the battery swap station 100 for battery swapping without intervention by a driver. In other embodiments, only corresponding to the scenario of battery swap while a user is driving the vehicle, the battery swapping vehicle management system 200 may also not comprise the planning interaction interface 221, the station-front space detection module 222, and the path planning module 223.

The parking monitoring module 224 is configured to monitor a travel of the vehicle with a battery to be swapped from the pre-parking region 103 to the battery swap region 101 to guide the vehicle with a battery to be swapped to quickly and efficiently enter the battery swap region 101. The parking monitoring module 224 comprises a foreign object detection module 226 and a path monitoring module 227. The foreign object detection module 226 is configured to detect an obstacle in a traveling direction of the vehicle with a battery to be swapped on a road of travel to provide early warning and advice to the vehicle with a battery to be swapped. The path monitoring module 227 is configured to monitor whether the travel of the vehicle with a battery to be swapped from the pre-parking region 103 to the battery swap region 101 conforms to the planned route, and alert the vehicle to adjust the traveling route if the travel does not conform to the planned route.

The in-station vehicle monitoring module 225 is configured to monitor whether the vehicle with a battery to be swapped is in position in the battery swap region 101. In this embodiment, the in-station vehicle monitoring module 225 comprises a vehicle in-position detection module 228 and a vehicle attitude detection module 229. The vehicle in-position detection module 228 is used to detect whether front wheels of the battery swapping vehicle reach a specific position in the battery swap region 101 so as to determine that the battery swapping vehicle fully enters the battery swap region 101. The vehicle attitude detection module 229 is used to detect whether there is a position offset of the battery swapping vehicle in the battery swap region 101, that is, whether the attitude of the battery swapping vehicle is correct. If the vehicle in-position detection module 228 and the vehicle attitude detection module 229 respectively detect that the battery swapping vehicle fully enters the battery swap region 101 and the attitude of the battery swapping vehicle is correct, it means that the vehicle with a battery to be swapped is in position in the battery swap region 101. Only when both the conditions of the position and attitude of the battery swapping vehicle in the battery swap region 101 are satisfied, the successful battery swap operation of the battery swapping vehicle can be ensured. If one of the conditions is not satisfied, it is likely to cause failure of battery swap. In other embodiments, it is also possible to detect whether the battery swapping vehicle is in position in the battery swap region 101 by means of comprising other modules in other ways.

The battery swap service unit 230 comprises a battery swapping condition detection module 231, a battery swapping action execution module 232, and a driver and passenger detection module 233. The battery swapping condition detection module 231 is configured to detect whether the vehicle with a battery to be swapped satisfies a battery swapping condition before the battery swapping action is performed. The battery swapping action execution module 232 is configured to perform the battery swapping action for a vehicle with a battery to be swapped that satisfies the battery swapping condition. The driver and passenger detection module 233 is configured to detect whether the driver and passenger in the battery swap station 100 are in a safe state during the operation of the battery swap service unit 230. During the battery swap, the driver and passenger may be in the battery swapping vehicle or may get out of the battery swapping vehicle at any time. The driver and passenger detection module 233 can be provided to alert the driver and passenger who are in an unsafe region so as to ensure the safety of the driver and passenger.

The departure assistance unit 240 comprises a departure assistance interaction interface 241 and an out-of-station detection module 242. The departure assistance interaction interface 241 is in communication connection with the out-of-station detection module 242. The departure assistance interaction interface 241 is configured to be able to interact with the user to determine whether there is a need to assist the battery swapping vehicle to exit the battery swap station 100. The out-of-station detection module 242 is used to detect the traffic condition outside the battery swap station 100 so as to provide a reference for assisting the battery swapping vehicle to exit the battery swap station 100.

In this embodiment, if the departure assistance interaction interface 241 receives a message that there is a need to assist the battery swapping vehicle to exit the battery swap station, the out-of-station detection module 242 begins to detect the traffic condition outside the battery swap station 100 and provides the detection result to the battery swapping vehicle to assist the battery swapping vehicle to exit the battery swap station 100. If it is determined that there is no need, the departure assistance interaction interface 241 receives a message that there is no need to assist the battery swapping vehicle to exit the battery swap station 100, the out-of-station detection module 242 does not perform the detection action, that is, the departure assistance unit 240 does not perform the action of assisting the battery swapping vehicle to exit the battery swap station 100.

In other embodiments, the out-of-station detection module 242 will initiate a detection action regardless of whether the message received by the departure assistance interaction interface 241 indicates that there is a need of departure assistance or indicates that there is no need of departure assistance. The difference lies in that when the departure assistance interaction interface 241 receives a message indicating that there is a need of departure assistance, the out-of-station detection module 242 automatically plans a departure plan for a departing vehicle based on the detection result of the environment outside station (e.g., indicating the timing of departure and the speed of travel of departure). When the departure assistance interaction interface 241 receives a message indicating that there is no need of departure assistance, the out-of-station detection module 242 provides the user with auxiliary information for a departure operation according to the detection result of the out-of-station environment. The operation of the out-of-station detection module 242 providing vehicle departure assistance to the user regardless of whether the user needs departure assistance can not only be compatible with both autonomous driving and manual driving modes, but also greatly improve the safety of the user when departing from the station after the battery swap. In addition, in the case where the user does not need departure assistance, the user needs to automatically determine and perform the departure operation according to the detection result provided by the out-of-station detection module 242, and this scenario is more dependent on the user's driving experience and is thus more flexible. In the case where the user needs departure assistance, the battery swapping vehicle management system 200 automatically plans a departure plan for a departing vehicle by means of the out-of-station detection module 242, and the planned departure method may be set to allow the departing vehicle to be driven out of the station only when the out-of-station detection module 242 detects that it is absolutely safe outside the station, so as to provide more conservative and safer departure assistance service.

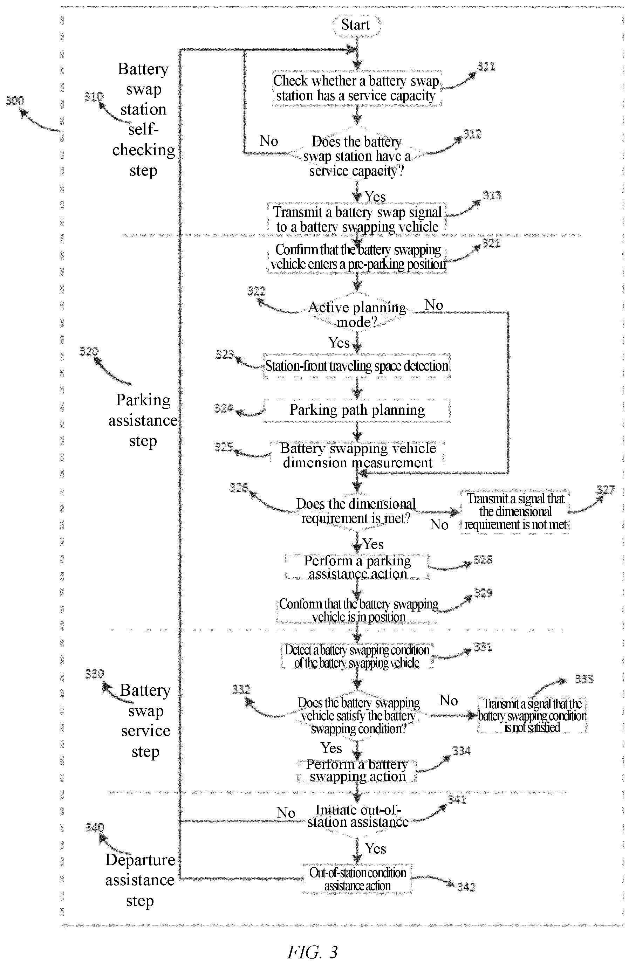

Taking FIG. 3 as an example, the specific process of a battery swapping vehicle management method 300 for a battery swap station 100 will be described in detail.

FIG. 3 shows a schematic diagram of a battery swapping vehicle management method 300 for the battery swap station 100 according to an embodiment of the disclosure. As shown in FIG. 3, the battery swapping vehicle management method 300 comprises a battery swap station self-checking step 310, a parking assistance step 320, a battery swap service step 330, and a departure assistance step 340. The battery swap station self-checking step 310 comprises: checking and determining whether the battery swap station has a service capacity, and notifying a vehicle with a battery to be swapped to be ready for battery swapping if the battery swap station has the service capacity; The parking assistance step 320 comprises: assisting the vehicle with a battery to be swapped to enter a battery swap region in the battery swap station from a pre-parking region outside the battery swap station. The battery swap service step 330 comprises: performing a battery swapping action for the vehicle with a battery to be swapped that is in position in the battery swap region. The departure assistance step 340 comprises assisting the battery swapping vehicle to exit the battery swap station.

In this embodiment, the battery swap station self-checking step 310 is performed by the battery swap station self-checking unit 210 of the battery swapping vehicle management system 200 as shown in FIG. 2, the parking assistance step 320 is performed by the parking assistance unit 220 of the battery swapping vehicle management system 200, the battery swap service step 330 is performed by the battery swap service unit 230 of the battery swapping vehicle management system 200, and the departure assistance step 340 is performed by the departure assistance unit 230 of the battery swapping vehicle management system 200. The battery swapping vehicle management method 300 in this embodiment can manage a battery swapping vehicle to automatically enter the battery swap station 100 for battery swapping without intervention by a driver and automatically exit the battery swap station 100 after the battery swap, which effectively realizes the automation and intelligence in the vehicle battery swap scenario and greatly improves the intelligent service capacity of the battery swap station 100. In other embodiments, corresponding to the scenario of battery swap while the user is driving the vehicle, the battery swapping vehicle management method 300 may also not comprise the departure assistance step 340. However, the battery swapping vehicle management system 200 that does not carry out the departure assistance step 340 may not realize a whole-process intelligent battery swap service for the battery swapping vehicle.

As shown in FIG. 3, when the battery swapping vehicle management method 300 is started, the battery swap station self-checking step 310 is performed first. The battery swap station self-checking step 310 comprises step 311 of checking whether the battery swap station 100 has a service capacity. After step 311, step 312 of determining whether the battery swap station 100 has a service capacity is performed. If the service capacity is available, the process proceeds to step 313, otherwise returns to the start cycle to proceed to step 311. Corresponding to the battery swap station self-checking unit 210, the station self-checking step 310 of this embodiment determines whether the battery swap station 100 has a service capacity by means of detecting whether there is a vehicle in the battery swap station 100 and detecting whether the battery swap station 100 is faulty. In other embodiments, it is also possible to check and determine whether the battery swap station 100 has a service capacity by way of other manners described in FIG. 2. In step 313, the battery swapping vehicle is notified to be ready for battery swapping by means of transmitting a battery swap signal to the vehicle with a battery to be swapped. When an electric vehicle needs battery swap, the vehicle with a battery to be swapped may send a battery swap request to the battery swap station 100, and the battery swapping vehicle management system 200 allows the battery swap requests of vehicles to be sorted according to the order of the battery swap requests received. In step 313, the notified battery swapping vehicle is a vehicle with a battery to be swapped with the highest priority. In other embodiments, the vehicles with a battery to be swapped that send a battery swap request may also be sorted by another priority. The parking assistance step 320 is performed after step 313.

For battery swapping, the battery swapping vehicle that receives a battery swap ready notification sent in step 313 will enter the pre-parking position 103 outside the battery swap station 100. The parking assistance step 320 comprises two stages, i.e., parking path planning and parking assistance operation. In the parking assistance step 320, step 321 of confirming that the battery swapping vehicle enters the pre-parking position 321 is performed first. Step 322 of determining whether the battery swapping vehicle is in an active planning mode is then performed. If yes, that is, the battery swapping vehicle needs to be in the active planning mode, step 323 is performed; and if not, that is, the battery swapping vehicle does not to be in the active planning mode, step 326 is performed. Step 322 is performed by means of the planning interaction interface 221 in the parking assistance unit 220 through interaction with the user, that is, the user may input the need for the active planning mode through the planning interaction interface 221. In the embodiments of the disclosure, if there is no manual intervention, for example, when the vehicle is in an autonomous driving state, the vehicle is automatically switched to the active planning mode to perform step 323.

In step 323, the space available for traveling in front of the battery swap station 100 is detected by means of the station-front space detection module 222 of the parking assistance unit 220. In this embodiment, the traveling space in front of the battery swap station 100 is a space outside the station at the entrance/exit of the battery swap station 100. Step 324 is performed after step 323. In step 324, the path planning module 223 provides a parking path planning for the battery swapping vehicle to travel from the pre-parking region 103 to the battery swap region 101 based on the content detected in step 323. Step 325 is performed after step 324.

In step 325, the dimensions of the battery swapping vehicle, including the length, width, and height of the battery swapping vehicle, are further detected. Next, step 326 is performed to determine whether the detected dimensions of the battery swapping vehicle meet the dimensional requirement applicable to the battery swap station 100. If yes, that is, the dimensions of the battery swapping vehicle meet the dimensional requirement applicable to the battery swap station 100, step 328 of performing a parking assistance action by means of the parking monitoring module 224 is performed. If not, that is, the dimensions of the battery swapping vehicle do not meet the dimensional requirement applicable to the battery swap station 100, step 327 of transmitting, to the battery swapping vehicle, a signal that the dimensional requirement is not met is performed. If the dimensions of the battery swapping vehicle do not meet the dimensional requirement applicable to the battery swap station 100, the battery swap station 100 cannot perform battery swap for the battery swapping vehicle, and the battery swapping vehicle needs to go to another battery swap station that meets the dimensional requirement to perform the battery swap operation.

Corresponding to the description of the parking monitoring module 224 shown in FIG. 2, the parking assistance action in step 328 comprises detecting an obstacle in front of the vehicle with a battery to be swapped on the road of travel and monitoring whether the travel of the battery swapping vehicle from the pre-parking region 103 to the battery swap region 101 conforms to the planned route so as to provide a traveling warning and advice to the vehicle with a battery to be swapped. In other embodiments, it is also possible to perform the parking assistance action in step 328 by other ways. In this embodiment, the parking path planning step is performed first and then the vehicle dimension detection step is performed. In other embodiments, the vehicle dimensions may also be checked first, and if the vehicle dimensions meet the requirement, the parking path planning step is performed. Step 329 is performed after step 328.

In step 329, the in-station vehicle monitoring module 225 monitors whether the vehicle with a battery to be swapped is in position in the battery swap region 101. Corresponding to the description of the in-station vehicle monitoring module 225 shown in FIG. 2, the step of confirming that the battery swapping vehicle is in position in step 329 comprises: detecting whether front wheels of the battery swapping vehicle reach a particular position in the battery swap region 101 by means of the vehicle in-position detection module 228, and detecting whether there is a position offset of the battery swapping vehicle in the battery swap region 101 by means of the vehicle attitude detection module 229, so as to determine whether the battery swapping vehicle fully enters the battery swap region 101 and whether the attitude of the battery swapping vehicle is correct. Next, the battery swap service step 330 is performed.

In the battery swap service step 330, step 331 of detecting whether the battery swapping condition of the battery swapping vehicle meets the battery swap requirement of the battery swap station 100 is performed first. Next, step 332 is performed to determine whether the battery swapping vehicle with a battery to be swapped satisfies the battery swapping condition; if yes, that is, the battery swapping vehicle satisfies the battery swapping condition, step 334 is performed to perform the battery swapping action for the battery swapping vehicle; and if not, that is, the battery swapping vehicle does not satisfy the battery swapping condition, step 333 is performed to transmit, to the battery swapping vehicle, a signal that the battery swapping condition is not satisfied. In this embodiment, the battery to be swapped is located at a chassis of the vehicle, and thus the battery swap station 100 can only smoothly perform the battery swapping action only if the chassis condition of the vehicle meet the battery swap requirement of the battery swap station 100. Therefore, in this embodiment, it is further possible to determine whether the battery swapping vehicle satisfies the battery swapping condition of the battery swap station 100 by means of detecting whether the chassis of the battery swapping vehicle meets the requirement. In other embodiments, it is also possible to determine whether hardware of the battery swapping vehicle satisfies the battery swapping condition of the battery swap station 100 by other ways with the mounting structure applicable to the battery to be swapped in the battery swapping vehicle. After step 334, the departure assistance step 340 is performed.

In the departure assistance step 340, a departure assistance interaction step 341 is performed first to determine whether to initiate out-of-station assistance. In the departure assistance interaction step 341, it is possible to determine, by the departure assistance interaction interface 241 and through interaction with the user, whether there is a need to assist the battery swapping vehicle to exit the battery swap station 100. If yes, step 342 is performed to perform an out-of-station condition assistance action; and if not, the process returns to the start step to retry the battery swap station self-checking step 310. Corresponding to the description of the departure assistance unit 240 shown in FIG. 2, the out-of-station condition assistance action in step 342 comprises detecting the traffic condition outside the battery swap station 100 by means of the out-of-station detection module 242 and providing the traffic condition to the battery swapping vehicle to assist the battery swapping vehicle to safely exit the battery swap station 100. The process returns to the start step after step 342 to perform the battery swap station self-checking step 310, so as to start a new battery swapping vehicle management process.

Corresponding to the above description for the departure assistance unit 240 shown in FIG. 2, in this embodiment, the departure assistance interaction step 341 is used to determine whether to perform an out-of-station condition assistance action, while in other embodiments, the departure assistance interaction step 341 may be used to determine the manner for performing the out-of-station condition assistance action. That is, in other embodiments, step 342 is performed after the departure assistance interaction step 341 to perform the out-of-station condition assistance action regardless of whether the message received in the departure assistance interaction step 341 indicates the need of departure assistance. Depending on the outcome indicated by the message, the difference lies in that if the message indicates that there is a need of departure assistance, a departure plan is automatically planned for the departing vehicle in step 342 by means of monitoring the environment outside the station (e.g., an indication of the timing of departure and the speed of travel for departure). If the message indicates that there is no need of departure assistance, auxiliary information of a departure operation is provided to the user by means of monitoring the environment outside the station in step 342 to facilitate the user to perform the departure operation based on the auxiliary information. The setting of the method provided for the user to perform step 342 to assist vehicle departure regardless of whether the user needs departure assistance can not only be compatible with both autonomous driving and manual driving modes, but also greatly improve the safety of the user when departing from the station after the battery swap.

Another aspect of the disclosure further provides a computer storage medium comprising instructions which, when executed, cause the battery swapping vehicle management method 300 as described in FIGS. 1 to 3 may be performed.

According to the disclosure, in the scenario of the battery swap station 100, by means of the integration of the service process of the battery swap station 100, the AI technology, user habits, and the actual characteristics of battery swap service vehicles, it is possible to develop a system and process that can intelligently and efficiently serve various vehicles, satisfy various user needs, and also ensure the battery swap efficiency. The system 200 and method 300 for battery swapping vehicle management of the disclosure can achieve the fully autonomous operation of the station end for a certain period of time and the fully self-service of the battery swap process without or with less operation and maintenance personnel. The system 200 and method 300 for battery swapping vehicle management of the disclosure provide effective management for battery swapping vehicles on the premise of giving priority to the safety of users and vehicles, and achieve efficient battery swap and self-service battery swap with the help of various AI services on the battery swap station 100 assisted by reasonable process arrangement. In addition, in terms of user experience, the system 200 and method 300 for battery swapping vehicle management of the disclosure realize the user's independent choice through station interaction and human-vehicle interaction, thereby bringing self-service battery swap experience within a controllable range.

According to the disclosure, in scenarios actually applied by the system 200 and method 300 for battery swapping vehicle management, it is possible to use edge computing devices to link stations, vehicles, and clouds to form an effective service network and can create, in the edge computing devices and with AI artificial intelligence image reasoning as the entry, a complete set of fully self-service battery swap process that is mainly based on automatic detection, supplemented by communication between the battery swap station 100 and vehicles, and supported by cloud feedback, which solves the core problem that the independent operation and maintenance of the battery swap station 100 cannot be closed-loop, and further improves the reliability and automation of the fully self-service battery swap.

In the practical application scenarios, according to the disclosure, it is possible to achieve active management and arrangement of the battery swapping vehicles and achieve communications with the battery swapping vehicles, so as to incorporate the user's settings and feedback on the vehicles to satisfy the user's service needs to effectively improve the overall user experience. In a macro perspective, the specific process comprises four steps of "battery swap station self-checking, parking assistance, battery swap service, and departure assistance". In each step, according to the disclosure, the purpose of management, guidance and service of the serviced vehicles is achieved, mainly based on the AI algorithm and supplemented by the detailed process design.

According to the disclosure, the system 200 and method 300 for battery swapping vehicle management implement confirmation and checking for the state of the battery swap station 100 so as to reliably provide fully self-service entry, battery swap and departure services of the battery swap station 100 on the premise of ensuring the user experience, thereby efficiently realizing the autonomous operation and maintenance of the battery swap station 100. In addition, according to the system 200 and method 300 for battery swapping vehicle management provided in the disclosure, based on the existing verification interaction mechanism and communication cooperation mechanism of the battery swap station 100 and the vehicle, with the integration of algorithms, sensors and Internet-of things devices, and focusing on the interaction process of the battery swap station 100 and the vehicle, it is possible to reach the perceivable, interactive, swappable, and zero-risk service goals in the battery swap process of the battery swapping vehicle and the serviceable, planned, warning, and zero-fault operation and maintenance goals of the battery swap station 100.

Those of ordinary skill in the art should understand that the disclosure is not limited to the implementations above, and the disclosure can be implemented in many other forms without departing from the essence and scope thereof. Therefore, the presented examples and embodiments are deemed as illustrative rather than restrictive, and without departing from the spirit and scope of the disclosure defined by the appended claims, the disclosure may cover various modifications and substitutions.

## Claims

1. A battery swapping vehicle management system (200) for a battery swap station (100), the battery swapping vehicle management system (200) comprising:
a battery swap station self-checking unit (210), the battery swap station self-checking unit (210) being configured to check and determine whether the battery swap station (100) has a service capacity, and notify a vehicle with a battery to be swapped to be ready for battery swapping if the battery swap station (100) has the service capacity;
a parking assistance unit (220), the parking assistance unit (220) being configured to assist the vehicle with a battery to be swapped to enter a battery swap region (101) in the battery swap station (100) from a pre-parking region (103) outside the battery swap station (100); and
a battery swap service unit (230), the battery swap service unit (230) being configured to perform a battery swapping action for the vehicle with a battery to be swapped that is in position in the battery swap region (101).

2. The battery swapping vehicle management system (200) according to claim 1, wherein the battery swapping vehicle management system (200) further comprises a departure assistance unit (240), the departure assistance unit (240) being configured to be able to assist the battery swapping vehicle to exit the battery swap station (100).

3. The battery swapping vehicle management system (200) according to claim 2, wherein the departure assistance unit (240) further comprises a departure assistance interaction interface (241), the departure assistance interaction interface (241) being configured to be able to interact with a user to determine whether there is a need to assist the battery swapping vehicle to exit the battery swap station (100); if yes, the departure assistance unit (240) performs an action of assisting the battery swapping vehicle to exit the battery swap station (100); and if not, the departure assistance unit (240) does not perform the action of assisting the battery swapping vehicle to exit the battery swap station (100).

4. The battery swapping vehicle management system (200) according to any one of claims 1 to 3, wherein
the battery swap station self-checking unit (210) comprises a vehicle presence detection module (211), the vehicle presence detection module (211) being configured to detect whether there is a vehicle in the battery swap station (100), and the battery swap station self-checking unit (210) determines whether the battery swap station (100) has a service capacity at least by determining whether there is a vehicle in the battery swap station (100).

5. The battery swapping vehicle management system (200) according to any one of claims 1 to 4, wherein the parking assistance unit (220) comprises:
a parking monitoring module (224), the parking monitoring module (224) being configured to monitor a travel of the vehicle with a battery to be swapped from the pre-parking region (103) to the battery swap region (101); and
an in-station vehicle monitoring module (225), the in-station vehicle monitoring module (225) being configured to monitor whether the vehicle with a battery to be swapped is in position in the battery swap region (101).

6. The battery swapping vehicle management system (200) according to any one of claims 1 to 5, wherein
the parking assistance unit (220) comprises a path planning module (223), the path planning module (223) being configured to be able to provide a traveling path planning for the vehicle with a battery to be swapped in the pre-parking region (103) to travel from the pre-parking region (103) to the battery swap region (101).

7. The battery swapping vehicle management system (200) according to claim 6, wherein
the parking assistance unit (220) further comprises a planning interaction interface (221), the planning interaction interface (221) being in communication connection with the path planning module (223), and the planning interaction interface (221) being configured to be able to interact with the user to determine whether there is a need to provide a traveling path planning for the vehicle with a battery to be swapped to travel from the pre-parking region (103) to the battery swap region (101); if it is determined that there is a need, the path planning module (223) performs an action of traveling path planning; and if it is determined that there is no need, the path planning module (223) does not perform the action of traveling path planning.

8. The battery swapping vehicle management system (200) according to any one of claims 1 to 7, wherein
the battery swap service unit (230) further comprises a battery swapping condition detection module (231), the battery swap condition detection module (231) being configured to detect whether the vehicle with a battery to be swapped satisfies a battery swapping condition before the battery swapping action is performed.

9. A battery swapping vehicle management method (300) for a battery swap station, the battery swapping vehicle management method (300) comprising:
a battery swap station self-checking step (310), the battery swap station self-checking step (310) comprising: checking and determining whether the battery swap station (100) has a service capacity, and notifying a vehicle with a battery to be swapped to be ready for battery swapping if the battery swap station (100) has the service capacity;
a parking assistance step (320), the parking assistance step (320) comprising: assisting the vehicle with a battery to be swapped to enter a battery swap region (101) in the battery swap station (100) from a pre-parking region (103) outside the battery swap station (100); and
a battery swap service step (330), the battery swap service step (330) comprising: performing a battery swapping action for the vehicle with a battery to be swapped that is in position in the battery swap region (101).

10. The battery swapping vehicle management method (300) according to claim 9, the battery swapping vehicle management method (300) further comprising a departure assistance step (340), the departure assistance step (340) comprising assisting the battery swapping vehicle to exit the battery swap station (100).

11. The battery swapping vehicle management method (300) according to claim 10, wherein the departure assistance step (340) further comprises a departure assistance interaction step (341), the departure assistance interaction step (341) comprising interacting with a user to determine whether there is a need to assist the battery swapping vehicle to exit the battery swap station (100), and if yes, assisting the battery swapping vehicle to exit the battery swap station (100).

12. The battery swapping vehicle management method (300) according to any one of claims 9 to 11, wherein
the battery swap station self-checking step (310) comprises: detecting whether there is a vehicle in the battery swap station (100), and determining whether the battery swap station (100) has a service capacity at least by determining whether there is a vehicle in the battery swap station (100).

13. The battery swapping vehicle management method (300) according to any one of claims 9 to 12, wherein
the parking assistance step comprises: monitoring a travel of the vehicle with a battery to be swapped from the pre-parking region (103) to the battery swap region (101), and detecting whether the vehicle with a battery to be swapped is in position in the battery swap region (101).

14. The battery swapping vehicle management method (300) according to any one of claims 9 to 13, wherein
the parking assistance step (320) comprises providing a traveling path planning for the vehicle with a battery to be swapped in the pre-parking region (103) to travel from the pre-parking region (103) to the battery swap region (101).

15. The battery swapping vehicle management method (300) according to any one of claims 9 to 14, wherein
the parking assistance step (320) further comprises interacting with the user to determine whether there is a need to provide a traveling path planning for the vehicle with a battery to be swapped to travel from the pre-parking region (103) to the battery swap region (101); and if it is determined that there is a need, the parking assistance step (320) further comprises providing the traveling path planning for the vehicle with a battery to be swapped.
